# EUROPEAN PATENT SPECIFICATION

(11) **EP 4 251 860 B1**
(45) Date of publication and mention of the grant of the patent: **09.10.2024**
(21) Application number: 21814919.3
(22) Date of filing: 23.11.2021
(51) Int. Cl.: F01K 3/18

(54) **UTILIZING AIR WASTE HEAT BOILER STACK GASES FROM DEHYDROGENATION UNITS**
VERWENDUNG VON ABGASEN VON ABHITZEKESSEL AUS DEHYDRIERUNGSEINHEITEN
UTILISATION DES GAZ DE CHEMINÉE DES CHAUDIÈRES DE RÉCUPÉRATION DE LA CHALEUR RÉSIDUELLE DE L'AIR PROVENANT D'UNITÉS DE DÉSHYDROGÉNATION

(30) Priority: 24.11.2020 EP 20209417
(43) Date of publication of application: 04.10.2023
(73) Proprietor: SABIC Global Technologies B.V., 4612 PX Bergen op Zoom (NL)
(72) Inventor: BODAS, Vijay Dinkar, Riyadh 11551 (SA); ANSARI, Mohammed Bismillah, Riyadh 11551 (SA)
(74) Representative: IPecunia
(86) International application number: PCT/IB2021/060894
(87) International publication number: WO 2022/112953

(56) References cited:
- US-A1- 2011 137 101
- RAHIMPOUR M.R. ET AL: "Assessment and comparison of different catalytic coupling exothermic and endothermic reactions: A review", APPLIED ENERGY., vol. 99, 1 November 2012 (2012-11-01), GB, pages 496 - 512, XP055802666, ISSN: 0306-2619, DOI: 10.1016/j.apenergy.2012.04.003
- VAN SINT ANNALAND M ET AL: "A novel reverse flow reactor coupling endothermic and exothermic reactions - Part II: Sequential reactor configuration for reversible endothermic reactions", CHEMICAL ENGINEERING SCIENCE, OXFORD, GB, vol. 57, no. 5, 1 March 2002 (2002-03-01), pages 855 - 872, XP004343916, ISSN: 0009-2509, DOI: 10.1016/S0009-2509(01)00423-7

## Description

### FIELD OF INVENTION

The present invention generally relates to optimization of heat integration for endothermic chemical production processes. More specifically, the present invention relates to processes of recovering heat from one or more chemical production processes to provide reaction heat for an endothermic process.

### BACKGROUND OF THE INVENTION

Heat integration and optimization are imperative in the chemical industry for improving energy efficiency and lowering production costs. Generally, at least a portion of heat needed by endothermic chemical reactions and/or processes can be provided by other exothermic chemical production processes, such that the need for heat via directly burning fuel is mitigated.

Steam reforming is an endothermic chemical production process that can be used to produce various chemicals including methanol, ammonia, 2-ethylhexanol, and steel. Currently, the energy efficiency for conventional steam reforming processes is limited due to poor heat recovery and heat integration. For instance, the conventional steam reformer generally uses air that is compressed by a forced draft fan and preheats the compressed air in an air preheater when the system includes induced and forced draft fans in the furnace design. In cases where the system does not include the draft fan or the induced draft fan, a natural draft is directly taken from the atmosphere. Thus, either way, conventional steam reforming systems utilize air at ambient temperature as source of combustion gas and have low energy efficiency and high production cost.

Overall, while systems and methods for providing heat for endothermic processes (e.g., a steam reforming process) exist, the need for improvements in this field persists in light of at least the aforementioned drawback for the conventional systems and methods.

### BRIEF SUMMARY OF THE INVENTION

A solution to at least the above mentioned problem associated with the systems and methods for providing heat to endothermic chemical processes is discovered. The solution resides in a method for producing one or more compounds by an endothermic reaction that includes providing heat and an oxidant to the endothermic reaction from an exhaust gas emanating from a catalyst regeneration process. This can be beneficial for at least recovering heat from the catalyst regeneration process, thereby improving energy efficiency for producing the one or more compounds. Additionally, the method can include recovering at least some heat from hot gas from a waste air vent of an MTBE production unit, further recovering heat from waste streams and increasing the energy efficiency for producing the compounds. Furthermore, the disclosed systems and methods can include a fixed damper installed upstream of a heat boiler stack for heating combustion gas of the endothermic chemical production processes. The fixed damper is configured to provide a back pressure, which in turn transports the combustion gas the furnace uses for the endothermic chemical production processes, resulting in reduced energy consumption for transporting the combustion gas. Therefore, the methods of the present invention provide a technical solution to the problem associated with the conventional systems and methods for providing heat for endothermic chemical production processes.

The method according to the invention is defined in claim 1.

Embodiments of the invention include a method of producing heat and an oxidant for an endothermic chemical production process. The method comprises combusting, in a gas turbine unit, a mixture of (1) a fuel and (2) a first stream comprising air to produce a turbine exhaust gas stream. The method comprises regenerating a catalyst of a catalytic reactor using the turbine exhaust gas stream as a regeneration gas stream to produce a regeneration exhaust gas stream. The method comprises processing the regeneration exhaust gas stream and/or the turbine exhaust gas stream to produce at least a portion of a combustion gas stream for the endothermic chemical production process.

Embodiments of the invention include a method of producing heat and an oxidant for an endothermic chemical production process. The method comprises combusting, in a gas turbine unit, a mixture of (1) a fuel and (2) a first stream comprising air to produce a turbine exhaust gas stream. The method comprises compressing a hot gas (e.g., hot gas from a waste air vent of an MTBE production unit) to produce a high pressure gas stream. The method comprises combusting a fuel in the high pressure gas stream to produce a regeneration gas stream. The method comprises regenerating, using the regeneration gas stream, a catalyst of a hydrocarbon dehydrogenation unit to produce an exhaust gas stream. The method comprises processing the exhaust gas stream and/or the turbine exhaust gas stream to produce at least a portion of a combustion gas comprising the oxidant for the endothermic chemical production process.

Embodiments of the invention include a method of producing heat and an oxidant for an endothermic chemical production process. The method comprises flowing a first stream comprising air and at least some fuel to a gas turbine unit. The method comprises combusting, in the gas turbine unit, the fuel in the first stream to (1) produce a turbine exhaust gas stream and (2) drive an air compressor. The method comprises processing hot gas stream from a waste air vent of an MTBE production unit to produce a regeneration gas stream. The processing of the first regeneration gas stream includes compressing the hot gas stream in the air compressor to produce a high pressure stream. The processing of the first regeneration gas stream further still includes combusting fuel in the high pressure gas stream to produce the regeneration gas stream. The method comprises regenerating, using the regeneration gas stream, a catalyst of a hydrocarbon dehydrogenation unit to produce a regeneration exhaust gas stream. The method comprises processing the regeneration exhaust gas stream and/or the turbine exhaust gas stream to produce at least a portion of a combustion gas comprising the oxidant for the endothermic chemical production process.

The following includes definitions of various terms and phrases used throughout this specification.

The terms "about" or "approximately" are defined as being close to as understood by one of ordinary skill in the art. In one non-limiting embodiment the terms are defined to be within 10%, preferably, within 5%, more preferably, within 1%, and most preferably, within 0.5%.

The terms "wt.%", "vol.%" or "mol.%" refer to a weight, volume, or molar percentage of a component, respectively, based on the total weight, the total volume, or the total moles of material that includes the component. In a non-limiting example, 10 moles of component in 100 moles of the material is 10 mol.% of component.

The term "substantially" and its variations are defined to include ranges within 10%, within 5%, within 1%, or within 0.5%.

The terms "inhibiting" or "reducing" or "preventing" or "avoiding" or any variation of these terms, when used in the claims and/or the specification, include any measurable decrease or complete inhibition to achieve a desired result.

The term "effective," as that term is used in the specification and/or claims, means adequate to accomplish a desired, expected, or intended result.

The use of the words "a" or "an" when used in conjunction with the term "comprising," "including," "containing," or "having" in the claims or the specification may mean "one," but it is also consistent with the meaning of "one or more," "at least one," and "one or more than one."

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The process of the present invention can "comprise," "consist essentially of," or "consist of" particular ingredients, components, compositions, etc., disclosed throughout the specification.

The term "primarily," as that term is used in the specification and/or claims, means greater than any of 50 wt.%, 50 mol.%, and 50 vol.%. For example, "primarily" may include 50.1 wt.% to 100 wt.% and all values and ranges there between, 50.1 mol.% to 100 mol.% and all values and ranges there between, or 50.1 vol.% to 100 vol.% and all values and ranges there between.

### BRIEF DESCRIPTION OF THE DRAWINGS

For a more complete understanding, reference is now made to the following descriptions taken in conjunction with the accompanying drawings, in which:
FIG. 1 shows a system for producing one or more compounds by an endothermic reaction, according to embodiments of the invention; and
FIG. 2 shows a schematic flowchart of a method for producing one or more compounds by an endothermic reaction, according to embodiments of the invention.

### DETAILED DESCRIPTION OF THE INVENTION

Currently, combustion air for a reformer is either provided by compressing ambient air using a forced draft fan and preheated in an air preheater, or directly flowing ambient air into the furnace by natural draft. In both cases, the combustion air is obtained directly from the atmosphere at an ambient temperature without any heat recovery from other units or processes. The energy efficiency for the conventional reformer is relatively low. The present invention provides a solution to this problem. The solution is premised on a method of producing one or more compounds by an endothermic reaction that includes providing heat and an oxidant to the endothermic reaction from at least an exhaust gas from a catalyst regeneration process. Furthermore, at least some heat of the exhaust gas can be recovered from (1) a hot gas from an exhaust vent of an MTBE production unit and (2) the catalyst regeneration process. Hence, the disclosed method is capable of improving energy cost for heating up the combustion air used for the endothermic reaction compared to conventional methods, which do not include a substantial heat recovery process. These and other non-limiting aspects of the present invention are discussed in further detail in the following sections.

### A. System for processing C₃ and C₄ hydrocarbon mixture

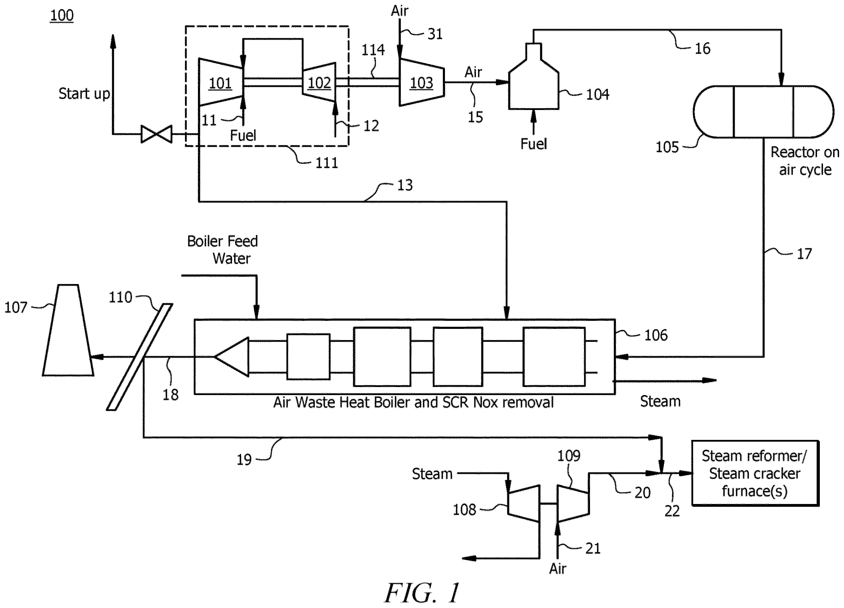

The system for producing one or more compounds by an endothermic reaction includes a gas turbine, a dehydrogenation unit, an air waste heat boiler stack, and a forced draft fan. Notably, the system is capable of reducing energy consumption and increasing efficiency for producing one or more compounds by an endothermic reaction compared to conventional systems. With reference to FIG. 1, a schematic diagram is shown for system 100, which is used for producing one or more compounds by an endothermic reaction.

The system 100 includes gas turbine unit 111(combination of 101 and 102) configured to combust a fuel of first fuel stream 11 and first stream 12 to produce turbine exhaust gas stream 13. Gas turbine unit 111 may include a single turbine, or two or more gas turbines operated in parallel or in series. Gas turbine unit 111 is further configured to drive process air compressor 103 via shaft 114. First stream 12 can include air. The air of first stream 12 may be under ambient conditions. In embodiments of the invention, the fuel of first fuel stream 11 includes natural gas, hydrogen, methane, ethane, carbon monoxide, carbon dioxide, or combinations thereof. The hydrogen of first fuel stream 11 may be produced and recovered from a hydrocarbon dehydrogenation process.

Process air compressor 103 can be an air compressor of a hydrocarbon dehydrogenation unit. The dehydrogenation unit can include an n-butane dehydrogenation unit, an isobutane dehydrogenation unit, a propane dehydrogenation unit, an isopentane dehydrogenation unit, a propane dehydrogenation unit, or combinations thereof. Process air compressor 103 is configured to compress inlet gas stream 31 to form high pressure gas stream 15. Inlet gas stream 31 may include an air stream. The air may comply with international standard with 60 to 85% relative humidity. Inlet gas stream 31 may be at ambient temperature. Inlet gas stream 31 may be a hot gas stream from a waste air vent of an MTBE production unit. According to embodiments of the invention, the hot gas stream from a waste air vent of an MTBE production unit comprises oxygen, nitrogen, carbon dioxide, carbon monoxide, oxides of sulfur and/or nitrogen, or combinations thereof. High pressure gas stream 15 may be at a pressure of 2.2 to 3 bar (abs) and all ranges and values there between.

According to embodiments of the invention, an outlet of process air compressor 103 is in fluid communication with an inlet of air heater 104 such that high pressure gas stream 15 flows from process air compressor 103 to air heater 104. Air heater 104 may be configured to combust a fuel and high pressure gas stream 15 to produce regeneration stream 16. In embodiments of the invention, regeneration gas stream 16 is at a temperature of 600 to 730 °C and all ranges and values there between including ranges of 600 to 610 °C, 610 to 620 °C, 620 to 630 °C, 630 to 640 °C, 640 to 650 °C, 650 to 660 °C, 660 to 670 °C, 670 to 680 °C, 680 to 690 °C, 690 to 700 °C, 700 to 710 °C, 710 to 720 °C, and 720 to 730 °C. In embodiments of the invention, regeneration gas stream 16 includes 1 to 15 vol.% oxygen gas, 74 to 79 vol.% nitrogen gas, 2 to 4 vol.% CO₂, 5 to 8 vol.% water vapor, and minor amount of argon.

In embodiments of the invention, an outlet of air heater 104 is in fluid communication with an inlet of catalytic reactor 105 such that regeneration gas stream 16 flows from air heater 104 to catalytic reactor 105. Catalytic reactor 105 comprises a catalyst disposed therein. Catalytic reactor 105 can include a dehydrogenation reactor configured to catalytically dehydrogenate a hydrocarbon to produce one or more unsaturated hydrocarbons. The dehydrogenation reactor can include an n-butane dehydrogenation reactor, an isobutane dehydrogenation reactor, a propane dehydrogenation reactor, and/or an isopentane dehydrogenation reactor.

In embodiments of the invention, catalytic reactor 105 is in regeneration mode and regeneration gas stream 16 is configured to regenerate spent catalyst of catalytic reactor 105 to produce regenerated catalyst and regeneration exhaust stream 17. In embodiments of the invention, regeneration exhaust stream 17 is at a temperature in a range of 530 to 560 °C. Regeneration exhaust stream 17 may include 1 to 15 vol.% oxygen.

According to embodiments of the invention, an outlet of catalytic reactor 105 is in fluid communication with air waste heat boiler and NOX removal unit 106 such that regeneration exhaust stream 17 flows from catalytic reactor 105 to air waste heat boiler and NOX removal unit 106. In embodiments of the invention, air waste heat boiler and NOX removal unit 106 is configured to heat boiler feed water by using at least a portion of regeneration exhaust stream 17 and/or at least a portion of turbine exhaust gas stream 13 as a heating medium to produce steam and/or superheated steam, and/or remove nitrogen oxides from regeneration exhaust stream 17 to produce first cooled exhaust gas stream 18. In embodiments of the invention, air waste heat boiler and NOX removal unit 106 comprises selective catalytic NOx removal system for removing nitrogen oxides. In embodiments of the invention, air waste heat boiler and NOX removal unit 106 further comprises a boiler coil, an economizer coil, a heat exchanger, or combinations thereof.

As an alternative to, or in addition to using at least a portion of turbine exhaust gas stream 13 as a heating medium for air waste heat boiler and NOX removal unit 106, at least a portion of turbine exhaust gas stream 13 may be flowed into catalytic reactor 105 as regeneration gas for regenerating the catalyst therein. In embodiments of the invention, gas turbine unit 111 can include two gas turbines operated in parallel. The two gas turbines can be configured to supply turbine exhaust gas stream 13 to catalytic reactor 105 as a regeneration gas.

An outlet of air waste heat boiler and NOX removal unit 106 is in fluid communication with an inlet of air waste heat boiler stack 107 such that at least a portion of first cooled exhaust stream 18 flows from air waste heat boiler and NOX removal unit 106 to air waste heat boiler stack 107. In embodiments of the invention, at least a portion of first cooled exhaust gas stream 18 can form flue gas stream 19. Flue gas stream 19 may be at a temperature of 230 to 240 °C. Flue gas stream 19 may include 1 to 15 vol.% oxygen. In embodiments of the invention, process air compressor 103, air heater 104, catalytic reactor 105, air waste heat boiler and NOX removal unit 106, and/or air waste heat boiler stack 107 may be part of a hydrocarbon dehydrogenation unit.

According to embodiments of the invention, baffle damper 110 may be installed between an outlet of air waste heat boiler and NOX removal unit 106 and an inlet of air waste heat boiler stack 107. Baffle damper 110, in embodiments of the invention, is configured to generate a back pressure for flue gas stream 19. The back pressure can be configured to flow flue gas stream 19 from baffle damper 110 to an outlet (duct from an outlet) of forced draft fan 109. In embodiments of the invention, forced draft fan 109 is configured to compress third combustion gas stream 21 to form compressed third combustion gas stream 20. Third combustion gas stream 21 may include air. Compressed third combustion gas stream 20 may be at a pressure of 200 to 400 mmH₂O, and a temperature of 15 to 16 °C. Flue gas stream 19 may be combined with compressed third combustion gas stream 21 to form fourth combustion gas stream 22.

In embodiments of the invention, fourth combustion gas stream 22 is flowed to a steam reformer to provide an oxidant and at least some heat for one or more steam reforming reactions. The steam reformer may include a steam reformer for producing methanol, ammonia, 2-ethylhexanol, steel, or combinations thereof. Fourth combustion gas stream 22 may be flowed to a furnace of the steam reformer. In embodiments of the invention, fourth combustion gas stream 22 may be flowed to a cracker. The cracker may be configured to crack ethane, propane, butanes, pentanes, or combinations thereof to produce olefins and/or other unsaturated hydrocarbons. In embodiments of the invention, the cracker may include a steam cracker. According to embodiments of the invention, system 100 further comprises steam turbine driver 108 configured to drive forced draft fan 109 to pressurize third combustion gas stream 21. According to embodiments of the invention, a switch mechanism can be installed between system 100 and the steam reformer. The switch mechanism can be configured to ensure the steam reformer and system 100 can each be individually operated, if needed. The switch mechanism can include one or more valves.

### B. Method of producing compounds by endothermic reaction

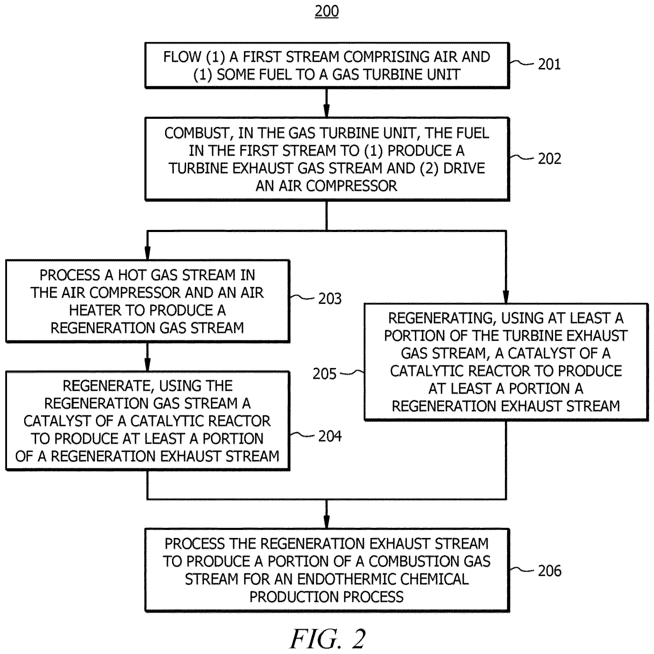

Methods of producing one or more compounds by an endothermic reaction have been discovered. As shown in FIG. 2, embodiments of the invention include method 200 for producing heat and an oxidant for an endothermic chemical production process with improved energy efficiency and reduced production cost compared to conventional methods. Method 200 may be implemented by system 100, as shown in FIG. 1 and described above.

According to embodiments of the invention, as shown in block 201, method 200 includes flowing first stream 12 and some fuel of first fuel stream 11 to gas turbine unit 111. In embodiments of the invention, first stream 12 includes ambient air. Fuel stream 11 may include natural gas, hydrogen gas, carbon monoxide, methane, ethane, carbon dioxide, or combinations thereof. In embodiments of the invention, the hydrogen gas of first fuel stream 11 is recovered from a catalytic dehydrogenation process.

According to embodiments of the invention, as shown in block 202, method 200 may include combusting, in gas turbine unit 111, the fuel and first stream 12 to drive process air compressor 103 and produce turbine exhaust gas stream 13. In embodiments of the invention, turbine exhaust gas stream 13 is at a temperature of 500 to 650 °C and all ranges and values there between including ranges of 500 to 510 °C, 510 to 520 °C, 520 to 530 °C, 530 to 540°C, 540 to 550 °C, 550 to 560 °C, 560 to 570 °C, 570 to 580 °C, 580 to 590 °C, 590 to 600 °C, 600 to 610 °C, 610 to 620 °C, 620 to 630 °C, 630 to 640 °C, and 640 to 650 °C. Turbine exhaust gas stream 13 may include 3 to 6 vol.% CO₂, 73 to 76 vol.% nitrogen, 12 to 15 vol.% oxygen, 6 to 8 vol.% water vapor.

According to embodiments of the invention, as shown in block 203, method 200 includes processing inlet gas stream 31 in air compressor 103 and air heater 104 to produce regeneration gas stream 16. Inlet gas stream 31 can include air, and/or a hot gas from a waste air vent of an MTBE production unit. The hot gas stream from a waste air vent of an MTBE production unit comprises oxygen, nitrogen, carbon dioxide, carbon monoxide, oxides of sulfur and/or nitrogen, or combinations thereof. In embodiments of the invention, regeneration gas stream 16 is at a temperature of 600 to 730 °C and all ranges and values there between including ranges of 600 to 610 °C, 610 to 620 °C, 620 to 630 °C, 630 to 640 °C, 640 to 650 °C, 650 to 660 °C, 660 to 670 °C, 670 to 680 °C, 680 to 690 °C, 690 to 700 °C, 700 to 710 °C, 710 to 720 °C, and 720 to 730 °C. In embodiments of the invention, regeneration gas stream 16 includes 1 to 15 vol.% oxygen gas, 74 to 79 vol.% nitrogen gas, 2 to 4 vol.% CO₂, and 5 to 8 vol.% water vapor.

Processing at block 203 may include compressing inlet gas stream 31 in process air compressor 103 to produce high pressure gas stream 15. In embodiments of the invention, high pressure gas stream 15 may be at a pressure of 2.2 to 3 bar (abs). Processing at block 203 may further include combusting, in air heater 104, some fuel with high pressure gas stream 15 to produce regeneration gas stream 16. Regeneration gas stream 16 may be at a temperature of 600 to 730 °C and all ranges and values there between including ranges of 600 to 610 °C, 610 to 620 °C, 620 to 630 °C, 630 to 640 °C, 640 to 650 °C, 650 to 660 °C, 660 to 670 °C, 670 to 680 °C, 680 to 690 °C, 690 to 700 °C, 700 to 710 °C, 710 to 720 °C, and 720 to 730 °C. Regeneration gas stream 16 may include 1 to 15 vol.% oxygen. Regeneration gas stream 16 may be at a pressure of 2 to 3 bar (abs).

According to embodiments of the invention, as shown in block 204, method 200 includes regenerating, using regeneration gas stream 16, a catalyst of catalytic reactor 105 to produce at least a portion of regeneration exhaust stream 17. In embodiments of the invention, the catalyst includes spent catalyst in need of regeneration. Regenerating at block 204 may be conducted at temperature of 650 to 700 °C. Regeneration exhaust stream 17 may be at a temperature in a range of 530 to 560 °C. Regeneration exhaust stream 17 may include 1 to 15 vol.% oxygen. Regeneration exhaust stream 17 may further include 2 to 4 vol.% CO₂, 5 to 8 vol.% water vapor and minor amounts of argon. As an alternative or in addition to block 204, as shown in block 205, method 200 includes regenerating, using at least a portion of turbine exhaust gas stream 13, the catalyst of catalytic reactor 105 to produce at least a portion of regeneration exhaust stream 17.

According to embodiments of the invention, as shown in block 206, method 200 includes processing regeneration exhaust stream 17 to produce at least a portion of fourth combustion gas stream 22. In embodiments of the invention, processing at block 206 includes using regeneration exhaust stream 17 to heat boiler feed water and produce steam and/or superheated steam (and thereby cool regeneration exhaust stream 17) and/or removing nitrogen oxides from regeneration exhaust stream 17 and/or turbine exhaust gas stream 13 in air waste boiler and NOX removal unit 106 to produce first cooled exhaust gas stream 18. In embodiments of the invention, first cooled exhaust gas stream 18 comprises less than 10 ppmy/y (dry) at 15% reference oxygen content of nitrogen oxides. First cooled exhaust gas stream 18 may be at a temperature of 230 to 240 °C. At least a portion of first cooled exhaust gas stream 18 can form flue gas stream 19. Flue gas stream 19 may be at a temperature of 230 to 240 °C. Processing at block 206, in embodiments of the invention, includes generating, by baffle damper 110, a back pressure in flue gas stream 19 such that flue gas stream 19 flows to (1) an outlet of forced draft fan 109 for a steam reformer and/or (2) duct work of a cracker (e.g., duct work of a furnace of a steam cracker). Flue gas stream 19 can form at least a portion fourth combustion gas stream 22 for one or more endothermic reactions, for providing at least some heat for the endothermic reactions and oxygen for supporting combustion of a fuel in the furnace of the steam reformer and/or a steam cracker. The steam reformer may include a steam reformer for producing methanol, ammonia, 2-ethylhexanol, steel, or combinations thereof. The cracker may be a steam cracker configured to crack ethane, propane, butanes, pentanes, or combinations thereof. Fourth combustion gas stream 22 may be flowed to a furnace of the steam reformer and/or the steam cracker. In embodiments of the invention, the back pressure is in a range of about 500 to 800 millimeter of water column (mmH₂O) and all ranges and values there between including ranges of 500 to 550 mmH₂O, 550 to 600 mmH₂O, 600 to 650 mmH₂O, 650 to 700 mmH₂O, 700 to 750 mmH₂O, and 750 to 800 mmH₂O.

In embodiments of the invention, flue gas stream 19 may be combined with third combustion gas stream 20 to form fourth combustion gas stream 22. In embodiments of the invention, third combustion gas stream 20 is produced by compressing third combustion gas stream 21 in forced draft fan 109. Third combustion gas stream 21 can include air. According to embodiments of the invention, flue gas stream 19 may be combined with third combustion gas stream 20 to form fourth combustion gas stream 22 so that flue gas stream 19 is at a 26 vol.% of fourth combustion gas stream 22. In embodiments of the invention, fourth combustion gas stream 22 comprises 15 to 21 vol.% oxygen. Fourth combustion gas stream 22 may further include less than 1% CO₂, about 3 to 4% water vapor, and 76 to 79% nitrogen. Fourth combustion gas stream 22 may be at a temperature of 150 to 250 °C and all ranges and values there between including ranges of 150 to 160 °C, 160 to 170 °C, 170 to 180 °C, 180 to 190 °C, 190 to 200 °C, 200 to 210 °C, 210 to 220 °C, 220 to 230 °C, 230 to 240 °C, and 240 to 250 °C. Fourth combustion gas stream 22 may include 15 to 21 vol.% oxygen and all ranges and values there between including ranges of 15 to 16 vol.%, 16 to 17 vol.%, 17 to 18 vol.%, 18 to 19 vol.%, 19 to 20 vol.%, and 20 to 21 vol.%. Fourth combustion gas stream 22 may be at a pressure of 200 to 300 mmH₂O and all ranges and values there between including ranges of 200 to 210 mmH₂O, 210 to 220 mmH₂O, 220 to 230 mmH₂O, 230 to 240 mmH₂O, 240 to 250 mmH₂O, 250 to 260 mmH₂O, 260 to 270 mmH₂O, 270 to 280 mmH₂O, 280 to 290 mmH₂O, and 290 to 300 mmH₂O. According to embodiments of the invention, fourth combustion gas stream 22 is used to provide oxidant and/or heat for a furnace of a steam reformer and/or steam cracker.

Although embodiments of the present invention have been described with reference to blocks of FIG. 2, it should be appreciated that operation of the present invention is not limited to the particular blocks and/or the particular order of the blocks illustrated in FIG. 2. Accordingly, embodiments of the invention may provide functionality as described herein using various blocks in a sequence different than that of FIG. 2

The systems and processes described herein can also include various equipment that is not shown and is known to one of skill in the art of chemical processing. For example, some controllers, piping, computers, valves, pumps, heaters, thermocouples, pressure indicators, mixers, heat exchangers, and the like may not be shown.

As part of the disclosure of the present invention, specific examples are included below. The examples are for illustrative purposes only and are not intended to limit the invention. Those of ordinary skill in the art will readily recognize parameters that can be changed or modified to yield essentially the same results.

### EXAMPLE

### (Heat balance for a methanol reforming furnace using a heat recovery process)

Table 1 shows comparison of process stream compositions of (A) a conventional methanol reformer and (B) a system and a method according to embodiments of the invention. The 6 columns on the right side of Table 1 shows the simulated operating data for the system according to embodiments of the invention. The 5 columns on the left of Table 1 shows experimental operating data of a conventional reformer. Purge in Table 1 means purge gas from synthesis loop. NG in Table 1 means natural gas that is fired into the reformed fire box as fuel (not shown in FIG. 1). Air in Table 1 means third combustion gas stream 21 of FIG. 1. GT exhaust in Table 1 means gas turbine exhaust stream 13. Hot air and hot mixed air in Table 1 means inlet gas stream 31. Flue gas in Table 1 means flue gas emanating from reformer fire box that is not shown in FIG. 1. The results show that, compared to conventional methanol reformer, the system and method according to embodiments of the invention were capable of reducing fuel gas (natural gas, NG in Table 1) consumption for heating the furnace of methanol reformer by heat recovery from operation of a hydrocarbon dehydrogenation unit.

**Table 1**

| Case with no stream 1 flow | | | | | | | Case with stream 1 flow added to combustion air | | | | | |
|---|---|---|---|---|---|---|---|---|---|---|---|---|
| | Purge | NG | Air | Hot Air | Flue Gas | | Purge | NG | Air | GT Exhaust | Hot | Flue Gas |
| | | | | | | | | | | | Mixed Air | |
| | vol/vol | vol/vol | vol/vol | vol/vol | vol/vol | | vol/vol | vol/vol | vol/vol | vol/vol | vol/vol | vol/vol |
| H2 | 76.24% | 0.00% | 0.00% | 0.00% | 0.00% | | 76,24% | 0.00% | 0.00% | 0.00% | 0.00% | 0.00% |
| N2 | 1.33% | 1.44% | 77.13% | 77.13% | 67.90% | | 1.33% | 1.44% | 77.13% | 75.77% | 76.85% | 68.21% |
| 02 | 0.00% | 0.00% | 20.50% | 20.50% | 1.63% | | 0.00% | 0.00% | 20.50% | 13.76% | 19.11% | 1,54% |
| CO | 3.66% | 0.00% | 0.00% | 0.00% | 0.00% | | 3.66% | 0.00% | 0.00% | 0.00% | 0.00% | 0.00% |
| CO2 | 3.83% | 0.35% | 0.00% | 0.00% | 6.23% | | 3.83% | 0.35% | 0.00% | 3.26% | 0.67% | 6.45% |
| CH4 | 14.93% | 75.11% | 0.00% | 0.00% | 0.00% | | 14.99% | 75.11% | 0.00% | 0.00% | 0.00% | 0.00% |
| C2H6 | 0.00% | 20.00% | 0.00% | 0.00% | 0.00% | | 0.00% | 20.00% | 0.00% | 0.00% | 0.00% | 0.00% |
| C3H8 | 0.00% | 3.10% | 0.00% | 0.00% | 0.00% | | 0.00% | 3.10% | 0.00% | 0.00% | 0.00% | 0.00% |
| | 0.01% | 0.00% | 2.37% | 2.37% | 24.24% | | 0.01% | 0.00% | 2.37% | 7.21% | 3.37% | 23.81% |
| | 100.00% | 100.00% | 100.00% | 100.00% | 100.00% | | 100.00% | 100.00% | 100.00% | 100.00% | 100.00% | 100.00% |
| WET total | 3469.8 | 411.1763 | 18202.37 | 18202.37 | 20751.9 | Kgmol/hr | 3469.8 | 11,67 | 15498.40 | 4029.584 | 19527.99 | 22077.51 |
| DegC | 35-45 | 35-45 | 35-45 | 310-330 | 210-240 | | 35-45 | 35-45 | 35-45 | 210 | 400 | 210-240 |

## Claims

1. A method of producing heat and an oxidant for an endothermic chemical production process, the method comprising:
combusting a mixture of a fuel (11) and a first stream (12) in a gas turbine unit (111) to produce a turbine exhaust gas stream (13), which gas turbine unit (111) is configured to drive a process air compressor (103), wherein the process air compressor (103) is configured to compress an inlet gas stream (31) to form a high pressure gas stream (15) and wherein the process air compressor (103) is in fluid communication with an inlet of an air heater (104), wherein the air heater (104) is configured to combust a fuel and the high pressure gas stream (15) to produce regeneration stream (16);
regenerating, using the regeneration stream (16) , a catalyst of a hydrocarbon dehydrogenation unit to produce a regeneration exhaust stream (17); and
processing the regeneration exhaust stream (17) to produce at least a portion of a combustion gas comprising the oxidant for the endothermic chemical production process.

2. A method of producing heat and an oxidant for an endothermic chemical production process, the method comprising:
combusting a mixture of a fuel (11) and a first stream (12) in a gas turbine unit (111) to produce a turbine exhaust gas stream (13);
regenerating, using the turbine exhaust gas stream (13), a catalyst of a hydrocarbon dehydrogenation unit to produce a regeneration exhaust gas stream (17); and
processing the regeneration exhaust stream (17) to produce at least a portion of a combustion gas comprising the oxidant for the endothermic chemical production process;
wherein the endothermic chemical production process includes a steam reforming process, and/or a steam cracking process.

3. The method of claim 1, wherein the regeneration gas stream (16) comprises 1 to 15 vol.% oxygen gas.

4. The method of claim 3, wherein the regeneration gas stream (16) is at a temperature of 600 to 730 °C and a pressure of 1 to 2 bar.

5. The method of claim 1, 3 or 4, wherein the inlet gas stream (31) is a hot gas from a waste air vent of an MTBE production unit.

6. The method of claim 5, wherein the hot gas from the waste air vent of the MTBE production unit comprises 1 to 15 wt.% oxygen gas.

7. The method of any of claims 1 to 6, wherein the processing of the regeneration exhaust gas stream (17) comprises:
cooling and/or removing nitrogen oxides from the exhaust gas stream (17) in an air waste boiler and NOX removal unit (106) to produce a first cooled exhaust stream(18);
flowing at least a portion of the first cooled exhaust stream (18) to form a flue gas stream (19); and
generating, by a baffle damper (110) installed upstream to an air waste heat boiler stack (107), a back pressure in the flue gas stream such that the flue gas stream (19) flows to an outlet of forced draft fan for a stream reformer and/or duct work of a furnace of steam cracker.

8. The method of claim 7, wherein the back pressure is configured to drive flow of the combustion gas to the endothermic chemical production process.

9. The method of claim 8, wherein the back pressure is in a range of about 500-800 millimeters of water column.

10. The method of any of claims 1 to 2, wherein the endothermic chemical production process includes a steam cracking process and/or a steam reforming process, wherein the steam reforming process includes a steam reforming process for producing methanol, a steam reforming process for producing ammonia, a steam reforming process for producing steel, a steam reforming process for producing 2-ethylhexanol, or combinations thereof.

11. The method of any of claims 1-2, wherein the dehydrogenation unit includes an n-butane dehydrogenation unit, an isobutane dehydrogenation unit, a propane dehydrogenation unit, an isopentane dehydrogenation unit, or combinations thereof.

12. The method of any of claims 5 to 6, wherein the hot gas from the waste air vent from the MTBE production unit further comprises nitrogen, carbon dioxide, carbon monoxide, oxides of sulfur and/or nitrogen, or combinations thereof.

13. The method of any of claims 5 to 6, wherein the hot gas from the waste air vent of the MTBE production unit is at a temperature of 150 to 250 °C.

14. The method of any of claims 1 to 2, wherein the combustion gas comprises 15 to 21 vol.% oxygen, and the combustion gas is at a temperature of 150 to 250 °C and a pressure of 200 to 300 millimeters water column.

## Patentansprüche

1. Verfahren zum Erzeugen von Wärme und eines Oxidationsmittels für einen endothermen chemischen Produktionsprozess, das Verfahren umfassend:
Verbrennen eines Gemisches aus einem Brennstoff (11) und einem ersten Strom (12) in einer Gasturbineneinheit (111), um einen Turbinenabgasstrom (13) zu erzeugen, wobei die Gasturbineneinheit (111) konfiguriert ist, um einen Prozessluftverdichter (103) anzutreiben, wobei der Prozessluftverdichter (103) konfiguriert ist, um einen Einlassgasstrom (31) zu verdichten, um einen Hochdruckgasstrom (15) auszubilden, und wobei der Prozessluftverdichter (103) in Fluidkommunikation mit einem Einlass eines Lufterhitzers (104) steht, wobei der Lufterhitzer (104) konfiguriert ist, um einen Brennstoff und den Hochdruckgasstrom (15) zu verbrennen, um einen Regenerationsstrom (16) zu erzeugen;
Regenerieren, unter Verwendung des Regenerationsstroms (16), eines Katalysators einer Kohlenwasserstoff-Dehydrierungseinheit, um einen Regenerationsabgasstrom (17) zu erzeugen; und
Verarbeiten des Regenerationsabgasstroms (17), um mindestens einen Anteil eines Verbrennungsgases zu erzeugen, umfassend das Oxidationsmittel für den endothermen chemischen Produktionsprozess.

2. Verfahren zum Erzeugen von Wärme und eines Oxidationsmittels für einen endothermen chemischen Produktionsprozess, das Verfahren umfassend:
Verbrennen eines Gemisches aus einem Brennstoff (11) und einem ersten Strom (12) in einer Gasturbineneinheit (111), um einen Turbinenabgasstrom (13) zu erzeugen;
Regenerieren, unter Verwendung des Turbinenabgasstroms (13), eines Katalysators einer Kohlenwasserstoff-Dehydrierungseinheit, um einen Regenerationsabgasstrom (17) zu erzeugen; und
Verarbeiten des Regenerationsabgasstroms (17), um mindestens einen Anteil eines Verbrennungsgases zu erzeugen, umfassend das Oxidationsmittel für den endothermen chemischen Produktionsprozess;
wobei der endotherme chemische Produktionsprozess einen Dampfreformierungsprozess und/oder einen Dampfspaltungsprozess einschließt.

3. Verfahren nach Anspruch 1, wobei der Regenerationsgasstrom (16) zu 1 bis 15 Vol.-% Sauerstoffgas umfasst.

4. Verfahren nach Anspruch 3, wobei der Regenerationsgasstrom (16) bei einer Temperatur von 600 bis 730 °C und einem Druck von 1 bis 2 bar liegt.

5. Verfahren nach Anspruch 1, 3 oder 4, wobei der Einlassgasstrom (31) ein heißes Gas aus einem Abluftkanal einer MTBE-Produktionseinheit ist.

6. Verfahren nach Anspruch 5, wobei das heiße Gas aus dem Abluftkanal der MTBE-Produktionseinheit zu 1 bis 15 Gew.-% Sauerstoffgas umfasst.

7. Verfahren nach einem der Ansprüche 1 bis 6, wobei die Verarbeitung des Regenerationsabgasstroms (17) umfasst:
Kühlen und/oder Entfernen von Stickoxiden aus dem Abgasstrom (17) in einem Abluftkessel und einer NOX-Entfernungseinheit (106), um einen ersten gekühlten Abgasstrom (18) zu erzeugen;
Fließen lassen von mindestens einem Anteil des ersten gekühlten Abgasstroms (18), um einen Rauchgasstrom (19) auszubilden; und
Generieren, durch eine Prallklappe (110), die stromaufwärts an einem Abluftwärmekesselkamin (107) installiert ist, eines Gegendrucks in dem Rauchgasstrom, derart, dass der Rauchgasstrom (19) zu einem Auslass eines Gebläses für künstlichen Zug für einen Strömungsreformer und/oder ein Leitungssystem eines Dampfspaltungsofens fließt.

8. Verfahren nach Anspruch 7, wobei der Gegendruck konfiguriert ist, um den Fluss des Verbrennungsgases zu dem endothermen chemischen Produktionsprozess anzutreiben.

9. Verfahren nach Anspruch 8, wobei der Gegendruck in einem Bereich von etwa 500-800 Millimeter Wassersäule liegt.

10. Verfahren nach einem der Ansprüche 1 bis 2, wobei der endotherme chemische Produktionsprozess einen Dampfspaltungsprozess und/oder einen Dampfreformierungsprozess einschließt, wobei der Dampfreformierungsprozess einen Dampfreformierungsprozess zum Erzeugen von Methanol, einen Dampfreformierungsprozess zum Erzeugen von Ammoniak, einen Dampfreformierungsprozess zum Erzeugen von Stahl, einen Dampfreformierungsprozess zum Erzeugen von 2-Ethylhexanol oder Kombinationen davon einschließt.

11. Verfahren nach einem der Ansprüche 1 bis 2, wobei die Dehydrierungseinheit eine n-Butan-Dehydrierungseinheit, eine Isobutan-Dehydrierungseinheit, eine Propan-Dehydrierungseinheit, eine Isopentan-Dehydrierungseinheit oder Kombinationen davon einschließt.

12. Verfahren nach einem der Ansprüche 5 bis 6, wobei das heiße Gas aus dem Abluftkanal der MTBE-Produktionseinheit ferner Stickstoff, Kohlendioxid, Kohlenmonoxid, Schwefeloxide und/oder Stickstoffoxide oder Kombinationen davon umfasst.

13. Verfahren nach einem der Ansprüche 5 bis 6, wobei das heiße Gas aus dem Abluftkanal der MTBE-Produktionseinheit bei einer Temperatur von 150 bis 250 °C liegt.

14. Verfahren nach einem der Ansprüche 1 bis 2, wobei das Verbrennungsgas zu 15 bis 21 Vol.-% Sauerstoff umfasst und bei einer Temperatur von 150 bis 250 °C und einem Druck von 200 bis 300 Millimeter Wassersäule liegt.

## Revendications

1. Procédé de production de chaleur et d'un oxydant pour un processus de production chimique endothermique, le procédé comprenant :
la combustion d'un mélange d'un combustible (11) et d'un premier flux (12) dans une unité de turbine à gaz (111) pour produire un flux de gaz d'échappement de turbine (13), cette unité de turbine à gaz (111) étant conçue pour entraîner un compresseur d'air de processus (103), dans lequel le compresseur d'air de processus (103) est conçu pour comprimer un flux de gaz d'entrée (31) pour former un flux de gaz à haute pression (15) et dans lequel le compresseur d'air de processus (103) est en communication fluidique avec une entrée d'un réchauffeur d'air (104), dans lequel le réchauffeur d'air (104) est conçu pour brûler un combustible et le flux de gaz à haute pression (15) pour produire un flux de régénération (16) ;
la régénération, à l'aide du flux de régénération (16), d'un catalyseur d'une unité de déshydrogénation d'hydrocarbures pour produire un flux d'échappement de régénération (17) ; et
le traitement du flux d'échappement de régénération (17) pour produire au moins une partie d'un gaz de combustion comprenant l'oxydant pour le processus de production chimique endothermique.

2. Procédé de production de chaleur et d'un oxydant pour un processus de production chimique endothermique, le procédé comprenant :
la combustion d'un mélange d'un combustible (11) et d'un premier flux (12) dans une unité de turbine à gaz (111) pour produire un flux de gaz d'échappement de turbine (13) ;
la régénération, à l'aide du flux de gaz d'échappement de turbine (13), d'un catalyseur d'une unité de déshydrogénation d'hydrocarbures pour produire un flux de gaz d'échappement de régénération (17) ; et
le traitement du flux d'échappement de régénération (17) pour produire au moins une partie d'un gaz de combustion comprenant l'oxydant pour le processus de production chimique endothermique ;
dans lequel le processus de production chimique endothermique comporte un processus de reformage à la vapeur et/ou un processus de craquage à la vapeur.

3. Procédé selon la revendication 1, dans lequel le flux de gaz de régénération (16) comprend de 1 à 15 % en volume d'oxygène gazeux.

4. Procédé selon la revendication 3, dans lequel le flux de gaz de régénération (16) est à une température de 600 à 730 °C et à une pression de 1 à 2 bars.

5. Procédé selon la revendication 1, 3 ou 4, dans lequel le flux de gaz d'entrée (31) est un gaz chaud provenant d'un évent d'évacuation d'air d'une unité de production de MTBE.

6. Procédé selon la revendication 5, dans lequel le gaz chaud provenant de l'évent d'évacuation d'air de l'unité de production de MTBE comprend de 1 à 15 % en poids d'oxygène gazeux.

7. Procédé selon l'une quelconque des revendications 1 à 6, dans lequel le traitement du flux de gaz d'échappement de régénération (17) comprend :
le refroidissement et/ou l'élimination d'oxydes d'azote du flux de gaz d'échappement (17) dans une chaudière de récupération d'air et une unité d'élimination des NOX (106) pour produire un premier flux d'échappement refroidi (18) ;
l'écoulement d'au moins une partie du premier flux d'échappement refroidi (18) pour former un flux de gaz de combustion (19) ; et
la génération, par un registre à déflecteur (110) installé en amont d'une cheminée de chaudière de récupération de chaleur d'air (107), une contre-pression dans le flux de gaz de combustion de sorte que le flux de gaz de combustion (19) s'écoule vers une sortie de ventilateur à tirage forcé pour une unité de reformage de flux et/ou un ensemble de conduits d'un four d'unité de craquage à vapeur.

8. Procédé selon la revendication 7, dans lequel la contre-pression est conçue pour entraîner un écoulement du gaz de combustion vers le processus de production chimique endothermique.

9. Procédé selon la revendication 8, dans lequel la contre-pression est comprise entre 500 et 800 millimètres de colonne d'eau.

10. Procédé selon l'une quelconque des revendications 1 à 2, dans lequel le processus de production chimique endothermique comporte un processus de craquage à la vapeur et/ou un processus de reformage à la vapeur, dans lequel le processus de reformage à la vapeur comprend un processus de reformage à la vapeur destiné à produire du méthanol, un processus de reformage à la vapeur destiné à produire de l'ammoniac, un processus de reformage à la vapeur destiné à produire de l'acier, un processus de reformage à la vapeur destiné à produire du 2-éthylhexanol, ou des combinaisons de ceux-ci.

11. Procédé selon l'une quelconque des revendications 1 et 2, dans lequel l'unité de déshydrogénation comporte une unité de déshydrogénation de n-butane, une unité de déshydrogénation d'isobutane, une unité de déshydrogénation de propane, une unité de déshydrogénation d'isopentane, ou des combinaisons de ceux-ci.

12. Procédé selon l'une quelconque des revendications 5 à 6, dans lequel le gaz chaud provenant de l'évent d'évacuation d'air de l'unité de production de MTBE comprend en outre de l'azote, du dioxyde de carbone, du monoxyde de carbone, des oxydes de soufre et/ou d'azote, ou des combinaisons de ceux-ci.

13. Procédé selon l'une quelconque des revendications 5 à 6, dans lequel le gaz chaud provenant de l'évent d'évacuation d'air de l'unité de production de MTBE est à une température de 150 et 250 °C.

14. Procédé selon l'une quelconque des revendications 1 à 2, dans lequel le gaz de combustion comprend de 15 à 21 % en volume d'oxygène, et le gaz de combustion est à une température de 150 à 250 °C et à une pression de 200 à 300 millimètres de colonne d'eau.
